# EUROPEAN PATENT APPLICATION

(11) **EP 4 675 751 A1**
(43) Date of publication of application: **07.01.2026**
(21) Application number: 24887584.1
(22) Date of filing: 28.08.2024
(51) Int. Cl.: H01M 10/42

(54) **METHOD FOR MULTI-FIELD SYNERGISTIC REPAIR OF RETIRED BATTERY, AND APPARATUS**

(30) Priority: 10.11.2023 CN 202311495837
(71) Applicant: Tianjin Chuxi Technology Co., Ltd, Tianjin 300000 (CN)
(72) Inventor: SUN, Guoliang, Tianjin 300000 (CN); SUN, Jie, Tianjin 300000 (CN); ZHANG, Baoshan, Tianjin 300000 (CN)
(74) Representative: Cabinet Chaillot
(86) International application number: PCT/CN2024/115125
(87) International publication number: WO 2025/097965

(57) **Abstract**

A multi-field synergistic repair method for retired batteries and devices thereof relates to the technical field of battery repair, which comprises the following steps: charging and discharging a retired battery in sequence; the charging and/or discharging are performed under the action of synergistic fields to obtain a regenerated battery; the synergistic fields are at least one of magnetic fields, pressure fields or temperature fields; the charging and discharging are cycled 1 time to 20 times in total. The invention solves the problems of complex process, high cost and poor effect of existing battery recycling processes; the battery performance can be restored to more than 80% of the initial capacity of the new battery, realizing the regeneration of lithium-ion batteries and sodium-ion batteries; the battery regeneration method has the advantages of no need to disassemble the battery, short time, low energy consumption, low cost, and zero emission.

## Description

### TECHNICAL FIELD

The invention relates to the technical field of battery repair, and in particular to a multi-field synergistic repair method for retired batteries and devices thereof.

### BACKGROUND ART

Nowadays, commercial batteries comprise power batteries, energy storage batteries and 3C batteries according to application scenarios, mainly lithium-ion batteries and sodium-ion batteries. Wherein, the power batteries and the 3C batteries are mainly lithium-ion batteries, and the energy storage batteries are mainly sodium-ion batteries. The more mature lithium-ion battery systems comprise nickel-cobalt-manganese ternary cathode//graphite anode, nickel-cobalt-manganese ternary cathode//silicon-based anode, lithium cobalt oxide cathode//graphite anode, lithium cobalt oxide cathode//silicon-based anode, lithium iron phosphate cathode//graphite anode, lithium manganese oxide cathode//graphite anode, lithium-rich manganese-based cathode//graphite anode, etc. The next generation of the lithium-ion batteries comprise high-nickel ternary cathode//lithium metal anode, lithium-rich manganese-based cathode//lithium metal anode, high-nickel ternary cathode//phosphorus-based anode, lithium-rich manganese-based cathode//phosphorus-based anode, etc.; the sodium-ion batteries comprise layered oxide cathode//carbon anode, Prussian blue cathode//carbon anode, polyphosphate cathode//carbon anode, layered oxide cathode//phosphorus-based anode, Prussian blue cathode//phosphorus-based anode, polyphosphate cathode//phosphorus-based anode, etc.

The service life of the power batteries is 5 years to 8 years, the service life of the 3C batteries is 3 years to 5 years, and the service life of the energy storage batteries is 5-15 years. Since 2016, the production and sales of the power batteries, the 3C batteries, and the energy storage batteries have been increasing day by day. The power batteries in our country have exceeded 600GWh and are increasing rapidly. Failure to recycle discarded batteries will severely impact the natural environment. Technical extraction of recycled batteries enables secondary utilization of many materials, forming a vast market for retired battery recycling. However, the current battery recycling process is highly complicated, mainly based on violent disassembly methods, with the following issues: 1 intricate procedures; 2 low recovery rates; 3 high costs; 4 prolonged cycles.

### SUMMARY OF THE INVENTION

In order to solve the technical problems mentioned hereinabove, the purpose of the invention is to provide a multi-field synergistic repair method for retired batteries and devices thereof, so as to solve the problems of complex process, high cost and poor effect of existing battery recycling processes.

The technical solution of the invention to solve the technical problems mentioned hereinabove is as follows: a multi-field synergistic repair method for retired batteries, comprising the following steps: charging and discharging a retired battery in sequence; the charging and/or discharging are performed under the action of synergistic fields to obtain a regenerated battery; the synergistic fields are at least one of magnetic fields, pressure fields or temperature fields; the charging and discharging are cycled 1 time to 20 times in total.

On the basis of the technical solution mentioned hereinabove, the invention configured to improve as follows:
further, the cathode material of the retired battery comprises at least one oxide of lithium, sodium, potassium, cobalt, nickel, manganese, iron, copper, titanium, vanadium, chromium, and zinc, or polyphosphate, or Prussian blue or Prussian white.

Further, the retired battery is a lithium-ion battery or a sodium-ion battery.

Further, the cathode material of the lithium-ion battery comprises at least one of lithium nickel oxide, lithium manganese oxide, lithium nickel manganese oxide, lithium cobalt oxide, lithium nickel cobalt manganese oxide, lithium-rich lithium manganese oxide, lithium iron phosphate, lithium vanadium phosphate, lithium manganese phosphate, lithium manganese iron phosphate and lithium cobalt phosphate.

Further, the cathode material of the sodium-ion battery comprises at least one of sodium cobaltate, sodium manganate, sodium nickelate, sodium vanadate, sodium chromium titanate, sodium manganese phosphate, sodium iron phosphate, sodium vanadium phosphate, sodium iron pyrophosphate, sodium iron sulfate, sodium copper iron manganate, sodium nickel iron manganate, sodium manganate rich in sodium, Prussian blue and Prussian white.

Further, the retired battery electrolyte is at least one of ester electrolyte systems, ether electrolyte systems, ionic liquid electrolyte systems and aqueous electrolyte systems.

Further, the anode material of the retired battery comprises at least one of carbon, phosphorus, silicon, tin, lithium and sodium.

Further, the retired battery is a soft-pack laminated battery, a steel-shell laminated battery, a blade battery, a cylindrical battery or a button battery.

Further, the charging and discharging are performed at the voltage range of 1.5-4.8V and the charge/discharge rate of 0.01-10C.

Further, the charging and discharging are performed at the voltage range of 3-4.2V and the charge/discharge rate of 0.01-1C.

Further, charging and discharging the retired battery in sequence; the charging and/or discharging are performed under the action of synergistic fields; the charging and discharging are cycled 1 time to 20 times in total.

Further, charging and discharging the retired battery in sequence; the charging and/or discharging are performed under the action of synergistic fields; 1 time charging and 1 time discharging are performed.

Further, charging and discharging the retired battery in sequence; the charging and/or discharging are performed under the action of synergistic fields; the charging and discharging are cycled 1 time to 10 times in total.

Further, charging and discharging the retired battery in sequence; the charging and/or discharging are performed under the action of synergistic fields; the charging and discharging are cycled 1 time to 5 times in total.

Further, charging and discharging the retired battery in sequence; the charging and/or discharging are performed under the action of synergistic fields; the charging and discharging are cycled 2 times in total.

Further, charging and discharging the retired battery in sequence; the charging and/or discharging are performed under the action of synergistic fields; the charging and discharging are cycled 3 times in total.

Further, charging and discharging the retired battery in sequence; the charging and/or discharging are performed under the action of synergistic fields; the charging and discharging are cycled 5 times in total.

Further, the time for charging and discharging is 4-100 hours.

Further, the time for charging and discharging is 6-20 hours.

Further, the time for charging and discharging is 10 hours.

Further, the magnetic field strength is 0.1-2T.

Further, the magnetic field strength is 0.3-1T.

Further, the magnetic field strength is 0.5-1T.

Further, the magnetic field strength is 0.3T-1.2T.

Further, the magnetic field strength is 0.4T.

Further, the magnetic field strength is 0.8T.

Further, the magnetic field strength is 1.2T.

Further, the pressure field intensity is 500-5000Pa.

Further, the pressure field intensity is 1000Pa.

Further, the temperature fields range from -30°C to 80°C.

Further, the temperature fields range from 0°C to 80°C.

Further, the temperature fields range from 35°C to 80°C.

The invention also provides the regenerated battery repaired by the method mentioned hereinabove.

The invention also provides devices adopted by the multi-field synergistic restoration method for a retired battery, comprising the retired battery, a charge-discharge instrument, pressure fields, magnetic fields and a temperature control box; a positive pole of the charge-discharge instrument is connected to a positive pole of the retired battery; a negative pole of the charge-discharge instrument is connected to a negative pole of the retired battery; the pressure fields are provided on both sides of side walls of the retired battery; the magnetic fields are provided outside the pressure fields; the retired battery, the pressure fields and the magnetic fields are all provided in the temperature control box; the charge-discharge instrument is provided outside the temperature control box.

The invention has the following beneficial effects:
1. the key to battery regeneration lies in repairing the bulk structure of cathode/anode materials and restoring grain boundary interfaces as well as electrode/electrolyte interfaces; the invention represents a novel non-dismantling regeneration technology, which is critical for the reuse of retired secondary ion batteries; by placing the retired battery to at least one field condition of the magnetic fields, the temperature fields, and the force fields, and performing charge-discharge activation regeneration within a specific voltage range, the bulk phase of cathode and anode grains can be repaired and reconstructed after several activation cycles, so that the battery performance can be restored to more than 80% of the initial capacity of the new battery, thereby realizing the regeneration of lithium-ion batteries and sodium-ion batteries; the battery regeneration method provided by the invention has the advantages of no need to disassemble the battery, short time, low energy consumption, low cost, and zero emission of three wastes;
2. the magnetic fields, the pressure fields or the temperature fields of the invention are used to change the bulk reaction process and interface reaction process of the cathode material and the anode material of the battery; the magnetic fields and the temperature fields are used to repair the arrangement and crystallinity of transition metal ions and alkali metal ions in the bulk phase of cathode materials, as well as to repair grain boundaries and electrode/electrolyte interface structures; the magnetic fields and the force fields are used to repair the bulk phase and interface structure of the anode material, and the pressure fields and the temperature fields are used to repair the electrode micro-nano structure and activate active substances that cannot react at room temperature;
3. the charge-discharge instrument of the invention works in synergy with the magnetic fields; the magnetic fields regulate the bulk atomic arrangement and the electron spin state, repair the bulk structure and the interface structure, and this approach is mainly applicable to cathode materials containing metal elements (mainly for the decline or failure of the cathode); the charge-discharge instrument works in synergy with the force fields to suppress volume changes, repair the electrode micro-nano structure, mainly applicable to metal lithium anodes, metal sodium anodes, phosphorus-based anodes, silicon-based anodes or carbon-based anodes (mainly for the decline or failure of the anode);

the charge-discharge instrument works in synergy with the temperature fields can improve the reaction kinetics, activate active substances that cannot react at room temperature, mainly applicable to metal lithium anode, metal sodium anode, phosphorus-based anode, silicon-based anode, carbon-based anode, lithium iron phosphate anode that is easy to decay at low temperature, and lithium manganese oxide anode that is easy to decay at high temperature;
the charge-discharge instrument, the pressure fields work in synergy with the temperature field; the temperature fields improve the reaction kinetics, activate the active substances in the cathode and/or anode that cannot react at room temperature; at the same time, the pressure fields suppress the volume change, repair the micro-nano structure of the cathode and/or anode, especially suitable for metal lithium anode, metal sodium anode, phosphorus-based anode, silicon-based anode or carbon-based anode (mainly for the decline or failure of the anode), especially for temperature-sensitive lithium iron phosphate cathode;
the charge-discharge instrument, the magnetic fields work in synergy with the temperature fields; the magnetic fields regulate the bulk atomic arrangement and electron spin state, repair the bulk structure and interface structure; at the same time, the temperature fields improve the reaction kinetics, activate active substances that cannot react at room temperature; this approach is mainly suitable for the bulk and interface repair of cathode materials containing metal elements (mainly for the decline or failure of the cathode), and is also suitable for the bulk and interface repair of metal lithium anodes, metal sodium anodes, phosphorus-based anodes, silicon-based anodes, carbon-based anodes, etc. (mainly for the decline or failure of the anode);
the charge-discharge instrument, the magnetic fields work in synergy with the pressure fields; the magnetic fields regulate the bulk atomic arrangement and electron spin state, repair the bulk structure and interface structure; at the same time, the pressure fields suppress volume changes, repair the electrode micro-nano structure; this approach is mainly suitable for bulk and interface repair of cathode materials containing metal elements (mainly for the decline or failure of the cathode), and is also suitable for bulk and interface repair of metal lithium anodes, metal sodium anodes, phosphorus-based anodes, silicon-based anodes, and carbon-based anodes (mainly for the decline or failure of the anode);
under the synergistic action of the charge-discharge instrument, the magnetic fields, the force fields and the temperature fields, the magnetic fields regulate the bulk atomic arrangement and electron spin state, repair the bulk structure and interface structure, while suppressing volume changes and repairing the electrode micro-nano structure; in addition, the magnetic fields improve the reaction kinetics, activate active substances that cannot react at room temperature; this approach is mainly suitable for the bulk and interface repair of cathode materials containing metal elements (mainly for the decline or failure of the cathode), and is also suitable for the bulk and interface repair of metal lithium anodes, metal sodium anodes, phosphorus-based anodes, silicon-based anodes, and carbon-based anodes (mainly for the decline or failure of the anode).

### BRIEF DESCRIPTION OF ACCOMPANY DRAWING

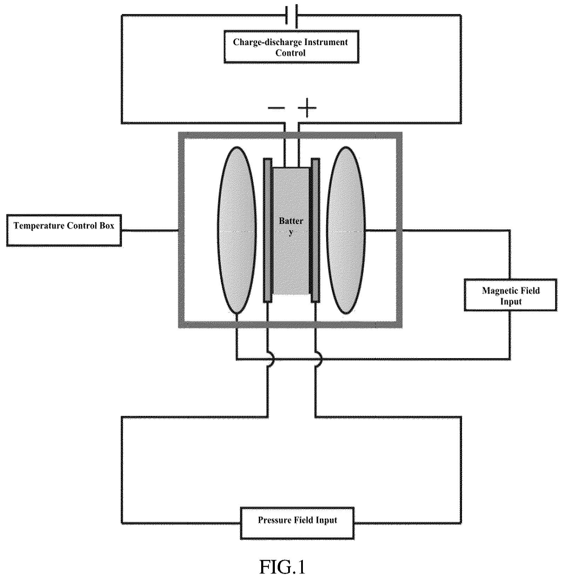

FIG. 1 is a diagram of the device of the invention.

### SPECIFIC EMBODIMENT OF THE INVENTION

The principles and features of the invention are described hereinafter in conjunction with the accompanying drawings. The examples are only used to explain the invention and are not used to limit the scope of the invention. If specific conditions are not specified in the embodiments, they are carried out according to normal conditions or conditions recommended by the manufacturer. If the manufacturer is not specified for the reagents or instruments used, they are all conventional products that can be purchased commercially.

Explanation of symbols:
the abbreviations of electrode materials in lithium batteries are as follows:
   NCM: LiNiCoMnO₂ ternary cathode
   NCM622: LiNiCoMnO₂ ternary cathode(atomic ratio of three elements is 6:2:2)
   NCM9 series: LiNiCoMnO₂ ternary cathode with high nickel content (molar content of nickel in transition metal ≥ 90%)
   NCM8 series: LiNiCoMnO₂ ternary cathode with high nickel content with high nickel content (molar content of nickel in transition metal ≥ 80%)
   LCO: LiCoO₂ cathode
   LNO: LiNiO₂
   LMO:LiMn₂O₄
   Lithium-rich LMO: lithium-rich LiMn₂O₄ cathode
   LNMO: LiNi_{0.5}Mn_{1.5}O₄
   LFP: LiFePO₄
   LMFP: LiMnxFe₁-xPO₄
   LCP: LiFePO₄
   G: graphite anode
   Si: silicon-based anode
   P: phosphorus-based anode
the abbreviations of the electrode materials in sodium batteries are as follows:
   NFM: Ni-Fe-Mn layered oxide cathode
   NVP: Na₃V₂(PO₄)₃ cathode
   NFP: NaFePO₄
   PB: Prussian blue cathode
   NCT: Na_{0.6}[Cr_{0.6}Ti_{0.4}]O₂ layered oxide cathode
   C: carbon-based anode
   P(Na): phosphorus-based anode

The specific capacity is calculated based on the mass of the positive electrode material, and the capacity retention rate is based on the initial capacity of the new battery.

The following embodiment 1-17 and comparative example 1-34 were conducted using the devices of FIG. 1.

Charge-discharge instrument manufacturer: Xinwei; wherein, the embodiment 8 uses the charge and discharge instrument model: CTE-4032-5V60A-NTA, and other embodiments use the charge and discharge instrument model: CT-4008Tn-5V6A-164/S1.

Magnetic field manufacturer: Henan Huaming Instrument Equipment Co., Ltd.; model: SBV, WD, NMR and HM series electromagnets and permanent magnets, such as SBV-100, SBV-50, WD-50, HM10020-08, etc.

Pressure field manufacturer: a pressure plate is a homemade device, and a pressure detector is from Bengbu Dayang Sensing System Engineering Co., Ltd.; model: new energy 3C lithium battery flat pressure sensor.

Temperature field manufacturer: Shanghai Yiheng Scientific Instrument Co., Ltd.; Model: high and low temperature test chamber BPHS-500B, blast drying chamber DHG and other series of temperature control chambers from Shanghai Yiheng Scientific Instrument Co., Ltd.

### Embodiment 1

A multi-field synergistic repair method for retired batteries, comprising the following steps:
the retired battery is synergistically activated using the charge-discharge instrument and the magnetic fields; the regeneration conditions comprise: performing 1 time charging and 1 time discharging at the voltage range of 3-4.2V, the magnetic field strength of 2T, and the charge/discharge rate of 0.2C to complete the activation (a total of 10 hours), and obtaining the regenerated battery;
wherein, the retired battery conditions are: NCM8 series//G (pouch-type lithium battery, n/p=1.05, 10Ah), showing 88% capacity retention after 50 cycles; initial specific capacity is 208 mAh/g, and the 50th specific capacity is 183 mAh/g.

### Embodiment 2

A multi-field synergistic repair method for retired batteries, comprising the following steps:
the retired battery is synergistically activated using the charge-discharge instrument and the magnetic fields; the regeneration conditions comprise: performing 1 time charging and 1 time discharging at the voltage range of 3-4.5V, the magnetic field strength of 0.6T to complete the activation (a total of 10 hours), and obtaining the regenerated battery;
wherein, the retired battery conditions are: LCO//G (pouch-type lithium battery, n/p=1.05, 10Ah), showing 87% capacity retention after 300 cycles; initial specific capacity is 168 mAh/g, and the 300th specific capacity is 146 mAh/g.

### Embodiment 3

A multi-field synergistic repair method for retired batteries, comprising the following steps:
the retired battery is synergistically activated using the charge-discharge instrument and the magnetic fields; the regeneration conditions comprise: performing 1 time charging and 1 time discharging at the voltage range of 2-4V, the magnetic field strength of 0.4T, and the charge/discharge rate of 0.5C; repeating 1 time charging and 1 time discharging twice to complete the activation (a total of 12 hours), and obtaining the regenerated battery;
wherein, the retired battery conditions are: NFM//C (pouch-type lithium battery, n/p=1.1, 5Ah), showing 86% capacity retention after 100 cycles; initial specific capacity is 136 mAh/g, and the 100th specific capacity is 117 mAh/g.

### Embodiment 4

A multi-field synergistic repair method for retired batteries, comprising the following steps:
the retired battery is synergistically activated using the charge-discharge instrument and the pressure fields; the regeneration conditions comprise: performing 1 time charging at the voltage range of 2-4.8V, the pressure field of 5000Pa, 1 time discharging without pressure fields, followed by restoring the pressure field for 1 time charging and removing the pressure field for 1 time discharging; repeating 1 time charging and 1 time discharging for 3 times in this way to complete activation (a total of 50 hours), and obtaining the regenerated battery;
wherein, the retired battery conditions are: LCP//Li (pouch-type lithium battery, n/p=1.2, 2Ah), showing 84% capacity retention after 50 cycles; initial specific capacity is 128 mAh/g, and the 50th specific capacity is 108 mAh/g.

### Embodiment 5

A multi-field synergistic repair method for retired batteries, comprising the following steps:
the retired battery is synergistically activated using the charge-discharge instrument and the pressure fields; the regeneration conditions comprise: performing 1 time charging and 1 time discharging at the voltage range of 2.5-4.7V, the pressure field of 2000Pa, and the charge/discharge rate of 0.2C to complete the activation (a total of 10 hours), and obtaining the regenerated battery;
wherein, the retired battery conditions are: LMO//Si (pouch-type lithium battery, n/p=1.2, 2Ah), showing 78% capacity retention after 50 cycles; initial specific capacity is 217 mAh/g, and the 50th specific capacity is 169 mAh/g.

### Embodiment 6

A multi-field synergistic repair method for retired batteries, comprising the following steps:
the retired battery is synergistically activated using the charge-discharge instrument and the pressure fields; the regeneration conditions comprise: performing 1 time charging and 1 time discharging at the voltage range of 2-3.8V, the pressure field of 1000Pa, and the charge/discharge rate of 0.2C; repeating 1 time charging and 1 time discharging to complete the activation (a total of 20 hours), and obtaining the regenerated battery;
wherein, the retired battery conditions are: PB//P_{(Na)} (pouch-type lithium battery, n/p=1.2, 2Ah), showing 90% capacity retention after 50 cycles; initial specific capacity is 138 mAh/g, and the 50th specific capacity is 124 mAh/g.

### Embodiment 7

A multi-field synergistic repair method for retired batteries, comprising the following steps:
the retired battery is synergistically activated using the charge-discharge instrument and the temperature fields; the regeneration conditions comprise: performing 1 time charging and 1 time discharging at the voltage range of 3-4.2V, the temperature field of 50°C, and the charge/discharge rate of 0.2C to complete the activation (a total of 10 hours), and obtaining the regenerated battery;
wherein, the retired battery conditions are: NCM622//Si (18650-type lithium battery, n/p=1.1), showing 88% capacity retention after 50 cycles; initial specific capacity is 182 mAh/g, and the 50th specific capacity is 160 mAh/g.

### Embodiment 8

A multi-field synergistic repair method for retired batteries, comprising the following steps:
the retired battery is synergistically activated using the charge-discharge instrument and the temperature fields; the regeneration conditions comprise: performing 1 time charging and 1 time discharging at the voltage range of 2.5-4.5V, the temperature field of 80°C, and the charge/discharge rate of 10C; repeating 1 time charging and 1 time discharging for 19 times to complete the activation (a total of 10 hours), and obtaining the regenerated battery;
wherein, the retired battery conditions are: LMFP//P (steel-shell lithium battery, n/p=1.1, 5Ah), showing 85% capacity retention after 50 cycles; initial specific capacity is 118 mAh/g, and the 50th specific capacity is 100 mAh/g.

### Embodiment 9

A multi-field synergistic repair method for retired batteries, comprising the following steps:
the retired battery is synergistically activated using the charge-discharge instrument and the temperature fields; the regeneration conditions comprise: performing 1 time charging and 1 time discharging at the voltage range of 2.2-3.8V, the temperature field of 40°C, and the charge/discharge rate of 0.1C to complete the activation (a total of 20 hours), and obtaining the regenerated battery;
wherein, the retired battery conditions are: NVP//P(Na) (sodium battery), showing 88% capacity retention after 50 cycles; initial specific capacity is 106 mAh/g, and the 50th specific capacity is 93 mAh/g.

### Embodiment 10

A multi-field synergistic repair method for retired batteries, comprising the following steps:
the retired battery is synergistically activated using the charge/discharge instrument, the magnetic fields, and the temperature fields; the regeneration conditions comprise: performing 1 time charging and 1 time discharging at the voltage range of 3-4.2V, the magnetic field intensity of 1T, the temperature field of 40°C, and charge/discharge rate of 0.2C to complete the activation (a total of 10 hours), and obtaining the regenerated battery;
wherein, the retired battery conditions are: LNO//Si (steel-shell lithium battery, n/p=1.05, 5Ah), showing 85% capacity retention after 50 cycles; initial specific capacity is 148 mAh/g, and the 50th specific capacity is 126 mAh/g.

### Embodiment 11

A multi-field synergistic repair method for retired batteries, comprising the following steps:
the retired battery is synergistically activated using the charge/discharge instrument, the magnetic fields, and the temperature fields; the regeneration conditions comprise: performing 1 time charging and 1 time discharging at the voltage range of 2.5-4.7V, the magnetic field intensity of 0.1T, the temperature field of -30°C, and the charge/discharge rate of 0.2C; repeating 1 time charging and 1 time discharging to complete the activation (a total of 20 hours), and obtaining the regenerated battery;
wherein, the retired battery conditions are: LMO//G (pouch-type lithium battery, n/p=1.2, 2Ah), showing 80% capacity retention after 50 cycles; initial specific capacity is 218 mAh/g, and the 50th specific capacity is 174 mAh/g.

### Embodiment 12

A multi-field synergistic repair method for retired batteries, comprising the following steps:
the retired battery is synergistically activated using the charge/discharge instrument, the magnetic fields, and the temperature fields; the regeneration conditions comprise: performing 1 time charging and 1 time discharging at the voltage range of 1.5-3V, the magnetic field intensity of 0.1T, the temperature field of 80°C, and the charge/discharge rate of 1C; repeating 1 time charging and 1 time discharging for 9 times to complete the activation (a total of 20 hours), and obtaining the regenerated battery;
wherein, the retired battery conditions are: NCT//P(Na) (pouch-type lithium battery, n/p=1.1, 2Ah), showing 84% capacity retention after 50 cycles; initial specific capacity is 75 mAh/g, and the 50th specific capacity is 63 mAh/g.

### Embodiment 13

A multi-field synergistic repair method for retired batteries, comprising the following steps:
the retired battery is synergistically activated using the charge/discharge instrument, the magnetic fields, and the pressure fields; the regeneration conditions comprise: performing 1 time charging and 1 time discharging at the voltage range of 3-4.3V, the magnetic field intensity of 0.8T, the pressure field of 500 Pa, and the charge/discharge rate of 0.1C, performing 1 time charging without the magnetic fields and the pressure fields, followed by restoring the pressure field for 1 time discharging to complete the activation (a total of 20 hours), and obtaining the regenerated battery;
wherein, the retired battery conditions are: NCM9 series//Li (soft-packaged lithium battery, n/p=1.2, 2 Ah), showing 80% capacity retention after 100 cycles; initial specific capacity is 220 mAh/g, and the 100th specific capacity is 176 mAh/g.

### Embodiment 14

A multi-field synergistic repair method for retired batteries, comprising the following steps:
the retired battery is synergistically activated using the charge/discharge instrument, the magnetic fields, and the pressure fields; the regeneration conditions comprise: performing 1 time charging and 1 time discharging at the voltage range of 1.5-3.8V, the magnetic field intensity of 0.3T, the pressure field of 1000 Pa, and the charge/discharge rate of 0.2C to complete the activation (a total of 10 hours), and obtaining the regenerated battery;
wherein, the retired battery conditions are: NFP//Na (soft-packaged lithium battery, n/p=1.1, 2 Ah), showing 83% capacity retention after 50 cycles; initial specific capacity is 125 mAh/g, and the 50th specific capacity is 104 mAh/g.

### Embodiment 15

A multi-field synergistic repair method for retired batteries, comprising the following steps:
the retired battery is synergistically activated using the charge/discharge instrument, the temperature fields, and the pressure fields; the regeneration conditions comprise: performing 1 time charging and 1 time discharging at the voltage range of 2.2-4V, the temperature field of 40°C, the pressure field of 3000 Pa, and the charge/discharge rate of 0.5C to complete the activation (a total of 10 hours), and obtaining the regenerated battery;
wherein, the retired battery conditions are: LFP//Li (blade-type lithium battery, n/p=1.1, 5 Ah), showing 91% capacity retention after 50 cycles; initial specific capacity is 144 mAh/g, and the 50th specific capacity is 131 mAh/g.

### Embodiment 16

A multi-field synergistic repair method for retired batteries, comprising the following steps:
the retired battery is synergistically activated using the charge/discharge instrument, the temperature fields, and the pressure fields; the regeneration conditions comprise: performing 1 time charging and 1 time discharging at the voltage range of 2.7-4.3V, the temperature field of 0°C, the pressure field of 2000 Pa, and the charge/discharge rate of 0.1C to complete the activation (a total of 20 hours), and obtaining the regenerated battery;
wherein, the retired battery conditions are: LMO//G (lithium battery, n/p=1.1, 1Ah), showing 88% capacity retention after 50 cycles; initial specific capacity is 106 mAh/g, and the 50th specific capacity is 93 mAh/g.

### Embodiment 17

A multi-field synergistic repair method for retired batteries, comprising the following steps:
the retired battery is synergistically activated using the charge/discharge instrument, the magnetic fields, the temperature fields, and the pressure fields; the regeneration conditions comprise: performing 1 time charging and 1 time discharging at the voltage range of 3-4.2V, the magnetic field intensity of 1.2T, the temperature field of 3.5°C, the pressure field of 2000 Pa, and the charge/discharge rate of 0.2C to complete the activation (a total of 10 hours), and obtaining the regenerated battery;
wherein, the retired battery conditions are: NCM8 series//Si (pouch-type lithium battery, n/p=1.1, 10Ah), showing 85% capacity retention after 50 cycles; initial specific capacity is 204 mAh/g, and the 50th specific capacity is 173 mAh/g.

Comparative examples 1-2:
   a method for repairing retired batteries, comprising the following steps:
   adopting only the charge/discharge instrument and the magnetic fields respectively, and the rest is the same as in embodiment 1.
Comparative examples 3-4:
   a method for repairing retired batteries, comprising the following steps:
   adopting only the charge/discharge instrument and the magnetic fields respectively, and the rest is the same as in embodiment 2.
Comparative examples 5-6:
   a method for repairing retired batteries, comprising the following steps:
   adopting only the charge/discharge instrument and the magnetic fields respectively, and the rest is the same as in embodiment 3.
Comparative examples 7-8:
   a method for repairing retired batteries, comprising the following steps:
   adopting only the charge/discharge instrument and the pressure fields (with a time of 25 hours) respectively, and the rest is the same as in embodiment 4.
Comparative examples 9-10:
   a method for repairing retired batteries, comprising the following steps:
   adopting only the charge/discharge instrument and the pressure fields respectively, and the rest is the same as in embodiment 5.
Comparative examples 11-12:
   a method for repairing retired batteries, comprising the following steps:
   adopting only the charge/discharge instrument and the pressure fields respectively, and the rest is the same as in embodiment 6.
Comparative examples 13-14:
   a method for repairing retired batteries, comprising the following steps:
   adopting only the charge/discharge instrument and the temperature fields respectively, and the rest is the same as in embodiment 7.
Comparative examples 15-16:
   a method for repairing retired batteries, comprising the following steps:
   adopting only the charge/discharge instrument and the temperature fields respectively, and the rest is the same as in embodiment 8.
Comparative examples 17-18:
   a method for repairing retired batteries, comprising the following steps:
   adopting only the charge/discharge instrument and the temperature fields respectively, and the rest is the same as in embodiment 9.
Comparative examples 19-20:
   a method for repairing retired batteries, comprising the following steps:
   adopting only the charge/discharge instrument, or using only the magnetic fields and the temperature fields respectively, and the rest is the same as in embodiment 10.
Comparative examples 21-22:
   a method for repairing retired batteries, comprising the following steps:
   adopting only the charge/discharge instrument, or using only the magnetic fields and the temperature fields respectively, and the rest is the same as in embodiment 11.
Comparative examples 23-24:
   a method for repairing retired batteries, comprising the following steps:
   adopting only the charge/discharge instrument, or using only the magnetic fields and the temperature fields respectively, and the rest is the same as in embodiment 12.
Comparative examples 25-26:
   a method for repairing retired batteries, comprising the following steps:
   adopting only the charge/discharge instrument, or using only the magnetic fields and the pressure fields respectively, and the rest is the same as in embodiment 13.
Comparative examples 27-28:
   a method for repairing retired batteries, comprising the following steps:
   adopting only the charge/discharge instrument, or using only the magnetic fields and the pressure fields respectively, and the rest is the same as in embodiment 14.
Comparative examples 29-30:
   a method for repairing retired batteries, comprising the following steps:
   adopting only the charge/discharge instrument, or using only the pressure fields and the temperature fields respectively, and the rest is the same as in embodiment 15.
Comparative examples 31-32
   a method for repairing retired batteries, comprising the following steps:
   adopting only the charge/discharge instrument, or using only the pressure fields and the temperature fields respectively, and the rest is the same as in embodiment 16.
Comparative examples 33-34:
   a method for repairing retired batteries, comprising the following steps:
   adopting only the charge/discharge instrument, or using only the magnetic fields, the pressure fields and the temperature fields respectively, and the rest is the same as in embodiment 17.

### Experimental example

1. The performance of the regenerated batteries repaired in embodiments 1-17 and comparative examples 1-34 was tested, and the results are shown in Table 1.

**Table 1 Battery Specific Capacity (mAh/g) and Retention Rate After Cycle.**

| Item | Initial Specific Capacity | Specific Capacity Before Repair | Specific Capacity After Repair | Capacity Retention Rate After Cycle |
|---|---|---|---|---|
| Embodiment 1 | 208 | 183 | 214 | 50 cycles, 95% |
| Comparative Example 1 | 208 | 183 | 181 | 50 cycles, 76% |
| Comparative Example 2 | 208 | 183 | 181 | 50 cycles, 75% |
| Embodiment 2 | 168 | 146 | 166 | 100 cycles, 94% |
| Comparative Example 3 | 168 | 146 | 145 | 100 cycles, 80% |
| Comparative Example 4 | 168 | 146 | 144 | 100 cycles, 79% |
| Embodiment 3 | 136 | 117 | 137 | 100 cycles, 90% |
| Comparative Example 5 | 136 | 117 | 116 | 100 cycles, 75% |
| Comparative Example 6 | 136 | 117 | 115 | 100 cycles, 74% |
| Embodiment 4 | 128 | 108 | 124 | 50 cycles, 89% |
| Comparative Example 7 | 128 | 108 | 107 | 50 cycles,71% |
| Comparative Example 8 | 128 | 108 | 108 | 50 cycles, 72% |
| Embodiment 5 | 217 | 169 | 208 | 50 cycles, 82% |
| Comparative Example 9 | 217 | 169 | 166 | 50 cycles, 64% |
| Comparative Example 10 | 217 | 169 | 168 | 50 cycles, 70% |
| Embodiment 6 | 138 | 124 | 133 | 50 cycles, 91% |
| Comparative Example 11 | 138 | 124 | 122 | 50 cycles, 80% |
| Comparative Example 12 | 138 | 124 | 127 | 50 cycles, 82% |
| Embodiment 7 | 182 | 160 | 186 | 50 cycles, 92% |
| Comparative Example 13 | 182 | 160 | 158 | 50 cycles, 80% |
| Comparative Example 14 | 182 | 160 | 160 | 50 cycles, 82% |
| Embodiment 8 | 118 | 100 | 116 | 50 cycles, 84% |
| Comparative Example 15 | 118 | 100 | 91 | 50 cycles, 70% |
| Comparative Example 16 | 118 | 100 | 92 | 50 cycles, 71% |
| Embodiment 9 | 106 | 93 | 103 | 50 cycles, 83% |
| Comparative Example 17 | 106 | 93 | 92 | 50 cycles, 71% |
| Comparative Example 18 | 106 | 93 | 90 | 50 cycles, 69% |
| Embodiment 10 | 148 | 126 | 147 | 50 cycles, 89% |
| Comparative Example 19 | 148 | 126 | 126 | 50 cycles, 74% |
| Comparative Example 20 | 148 | 126 | 126 | 50 cycles, 73% |
| Embodiment 11 | 218 | 174 | 215 | 50 cycles, 83% |
| Comparative Example 21 | 218 | 174 | 172 | 50 cycles, 73% |
| Comparative Example 22 | 218 | 174 | 172 | 50 cycles, 73% |
| Embodiment 12 | 75 | 63 | 76 | 50 cycles, 88% |
| Comparative Example 23 | 75 | 63 | 60 | 50 cycles, 78% |
| Comparative Example 24 | 75 | 63 | 60 | 50 cycles, 76% |
| Embodiment 13 | 220 | 176 | 219 | 50 cycles, 90% |
| Comparative Example 25 | 220 | 176 | 175 | 50 cycles, 70% |
| Comparative Example 26 | 220 | 176 | 176 | 50 cycles, 71% |
| Embodiment 14 | 125 | 104 | 120 | 50 cycles, 87% |
| Comparative Example 27 | 125 | 104 | 102 | 50 cycles, 70% |
| Comparative Example 28 | 125 | 104 | 103 | 50 cycles, 72% |
| Embodiment 15 | 144 | 131 | 143 | 50 cycles, 92% |
| Comparative Example 29 | 144 | 131 | 130 | 50 cycles, 81% |
| Comparative Example 30 | 144 | 131 | 132 | 50 cycles, 82% |
| Embodiment 16 | 106 | 93 | 108 | 50 cycles, 90% |
| Comparative Example 31 | 106 | 93 | 92 | 50 cycles, 76% |
| Comparative Example 32 | 106 | 93 | 94 | 50 cycles, 80% |
| Comparative Example 16 | 118 | 100 | 92 | 50 cycles, 71% |
| Embodiment 9 | 106 | 93 | 103 | 50 cycles, 83% |
| Comparative Example 17 | 106 | 93 | 92 | 50 cycles, 71% |
| Comparative Example 18 | 106 | 93 | 90 | 50 cycles, 69% |
| Embodiment 10 | 148 | 126 | 147 | 50 cycles, 89% |
| Comparative Example 19 | 148 | 126 | 126 | 50 cycles, 74% |
| Comparative Example 20 | 148 | 126 | 126 | 50 cycles, 73% |
| Embodiment 11 | 218 | 174 | 215 | 50 cycles, 83% |
| Comparative Example 21 | 218 | 174 | 172 | 50 cycles, 73% |
| Comparative Example 22 | 218 | 174 | 172 | 50 cycles, 73% |
| Embodiment 12 | 75 | 63 | 76 | 50 cycles, 88% |
| Comparative Example 23 | 75 | 63 | 60 | 50 cycles, 78% |
| Comparative Example 24 | 75 | 63 | 60 | 50 cycles, 76% |
| Embodiment 13 | 220 | 176 | 219 | 50 cycles, 90% |
| Comparative Example 25 | 220 | 176 | 175 | 50 cycles, 70% |
| Comparative Example 26 | 220 | 176 | 176 | 50 cycles, 71% |
| Embodiment 14 | 125 | 104 | 120 | 50 cycles, 87% |
| Comparative Example 27 | 125 | 104 | 102 | 50 cycles, 70% |
| Comparative Example 28 | 125 | 104 | 103 | 50 cycles, 72% |
| Embodiment 15 | 144 | 131 | 143 | 50 cycles, 92% |
| Comparative Example 29 | 144 | 131 | 130 | 50 cycles, 81% |
| Comparative Example 30 | 144 | 131 | 132 | 50 cycles, 82% |
| Embodiment 16 | 106 | 93 | 108 | 50 cycles, 90% |
| Comparative Example 31 | 106 | 93 | 92 | 50 cycles, 76% |
| Comparative Example 32 | 106 | 93 | 94 | 50 cycles, 80% |
| Comparative Example 16 | 118 | 100 | 92 | 50 cycles, 71% |
| Embodiment 9 | 106 | 93 | 103 | 50 cycles, 83% |
| Comparative Example 17 | 106 | 93 | 92 | 50 cycles, 71% |
| Comparative Example 18 | 106 | 93 | 90 | 50 cycles, 69% |
| Embodiment 10 | 148 | 126 | 147 | 50 cycles, 89% |
| Comparative Example 19 | 148 | 126 | 126 | 50 cycles, 74% |
| Comparative Example 20 | 148 | 126 | 126 | 50 cycles, 73% |
| Embodiment 11 | 218 | 174 | 215 | 50 cycles, 83% |
| Comparative Example 21 | 218 | 174 | 172 | 50 cycles, 73% |
| Comparative Example 22 | 218 | 174 | 172 | 50 cycles, 73% |
| Embodiment 12 | 75 | 63 | 76 | 50 cycles, 88% |
| Comparative Example 23 | 75 | 63 | 60 | 50 cycles, 78% |
| Comparative Example 24 | 75 | 63 | 60 | 50 cycles, 76% |
| Embodiment 13 | 220 | 176 | 219 | 50 cycles, 90% |
| Comparative Example 25 | 220 | 176 | 175 | 50 cycles, 70% |
| Comparative Example 26 | 220 | 176 | 176 | 50 cycles, 71% |
| Embodiment 14 | 125 | 104 | 120 | 50 cycles, 87% |
| Comparative Example 27 | 125 | 104 | 102 | 50 cycles, 70% |
| Comparative Example 28 | 125 | 104 | 103 | 50 cycles, 72% |
| Embodiment 15 | 144 | 131 | 143 | 50 cycles, 92% |
| Comparative Example 29 | 144 | 131 | 130 | 50 cycles, 81% |
| Comparative Example 30 | 144 | 131 | 132 | 50 cycles, 82% |
| Embodiment 16 | 106 | 93 | 108 | 50 cycles, 90% |
| Comparative Example 31 | 106 | 93 | 92 | 50 cycles, 76% |
| Comparative Example 32 | 106 | 93 | 94 | 50 cycles, 80% |
| Embodiment 17 | 204 | 173 | 202 | 50 cycles, 85% |
| Comparative Example 33 | 204 | 173 | 172 | 50 cycles, 70% |
| Comparative Example 34 | 204 | 173 | 174 | 50 cycles, 72% |

It can be seen from Table 1, the method of the invention can effectively repair and regenerate retired batteries.

What mentioned hereinabove is only a preferred embodiment of the invention and is not intended to limit the invention. Any modifications, equivalent replacements, improvements, etc. made within the spirit and principles of the invention shall be included in the protection scope of the invention.

## Claims

1. A multi-field synergistic repair method for retired batteries, comprising the following steps: charging and discharging a retired battery in sequence; the charging and/or discharging are performed under the action of synergistic fields to obtain a regenerated battery; the synergistic fields are at least one of magnetic fields, pressure fields or temperature fields; the charging and discharging are cycled 1 time to 20 times in total.

2. The multi-field synergistic repair method for retired batteries according to claim 1, wherein the cathode material of the retired battery comprises at least one oxide of lithium, sodium, potassium, cobalt, nickel, manganese, iron, copper, titanium, vanadium, chromium, and zinc, or polyphosphate, or Prussian blue or Prussian white.

3. The multi-field synergistic repair method for retired batteries according to claim 1, wherein the retired battery is a lithium-ion battery or a sodium-ion battery.

4. The multi-field synergistic repair method for retired batteries according to claim 1, wherein the retired battery electrolyte is at least one of ester electrolyte systems, ether electrolyte systems, ionic liquid electrolyte systems and aqueous electrolyte systems.

5. The multi-field synergistic repair method for retired batteries according to claim 1, wherein the anode material of the retired battery comprises at least one of carbon, phosphorus, silicon, tin, lithium and sodium.

6. The multi-field synergistic repair method for retired batteries according to claim 1, wherein the magnetic field strength is 0.1-2T.

7. The multi-field synergistic repair method for retired batteries according to claim 1, wherein the pressure field intensity is 500-5000Pa.

8. The multi-field synergistic repair method for retired batteries according to claim 1, wherein the temperature of the temperature fields is -30°C to 80°C.

9. The regenerated battery repaired by the multi-field synergistic repair method for retired batteries as described in any one of claim 1 to claim 8.

10. Devices adopted by the multi-field synergistic repair method for retired batteries according to any one of claim 1 to claim 8, comprising the retired battery, a charge-discharge instrument, pressure fields, magnetic fields and a temperature control box; a positive pole of the charge-discharge instrument is connected to a positive pole of the retired battery; a negative pole of the charge-discharge instrument is connected to a negative pole of the retired battery; the pressure fields are provided on both sides of side walls of the retired battery; the magnetic fields are provided outside the pressure fields; the retired battery, the pressure fields and the magnetic fields are all provided in the temperature control box; the charge-discharge instrument is provided outside the temperature control box.
